# DEMANDE DE BREVET EUROPEEN

(11) **EP 3 656 681 A1**
(43) Date de publication de la demande: **27.05.2020**
(21) Numéro de dépôt: 19209728.5
(22) Date de dépôt: 18.11.2019
(51) Int. Cl.: B64D 45/04, G01S 13/91, G08G 5/02

(54) **DISPOSITIF ET PROCEDE D'AIDE A L'ATTERRISSAGE D'UN AERONEF PAR CONDITIONS DE VISIBILITE REDUITE**

(30) Priorité: 22.11.2018 FR 1871696
(71) Demandeur: Thales, 92400 Courbevoie (FR)
(72) Inventeur: VEYRAC, Yoan, 33701 MERIGNAC (FR); GARREC, Patrick, 33701 MERIGNAC (FR); CORNIC, Pascal, 29238 BREST (FR)
(74) Mandataire: Lucas, Laurent Jacques

(57) **Abrégé**

Le dispositif effectuant la détection et le positionnement de ladite piste par rapport audit aéronef, il comporte au moins :
- Un senseur radar (1) ;
Un système (2) de collecte d'images radar, effectuant la collecte et l'étiquetage d'images obtenues par des senseurs radar portés par des aéronefs lors de phases d'atterrissage sur ladite piste sous condition nominale, ledit étiquetage d'une image donnant des informations de positionnement de la dite piste par rapport à l'aéronef porteur du senseur prenant ladite image ;
Un réseau de neurones (3) entraîné à partir des images étiquetées et collectées lors d'atterrissages sur ladite piste sous condition nominale, ledit réseau estimant la position de ladite piste d'atterrissage par rapport audit aéronef grâce aux images radar obtenues par ledit senseur (1) lors de l'atterrissage en cours ;
Un bloc fonctionnel (4) effectuant l'exploitation et la mise en forme des données de positionnement de ladite piste par rapport audit aéronef issues du réseau de neurones permettant de formater lesdites données dans une interface adaptée.

## Description

La présente invention concerne un dispositif et un procédé d'aide à l'atterrissage par conditions de visibilité réduite.

Le domaine technique de l'invention est celui de la détection et de la reconnaissance d'un environnement relativement à la position d'un observateur. Le domaine d'exploitation principal est celui du radar, pour des applications d'aide à l'atterrissage. Cette invention vise plus précisément les systèmes d'aide à l'atterrissage « EVS » (Enhanced Vision System). L'invention pourrait s'appliquer à d'autres senseurs (par exemple optiques ou électro-optiques).

L'invention adresse notamment le problème de l'aide à l'atterrissage d'aéronefs sur une piste d'atterrissage, par conditions de visibilité réduite, en particulier à cause de conditions météorologiques difficiles, par exemple en cas de brouillard. Les normes imposent des règles d'obtention de visibilité pendant la phase d'atterrissage. Ces règles se traduisent par des seuils de décision qui se réfèrent à l'altitude de l'avion lors de sa phase de descente. A chacun de ces seuils, des repères visuels identifiés doivent être obtenus pour poursuivre la manœuvre d'atterrissage, sans quoi elle doit être abandonnée. Les manœuvres d'atterrissage abandonnées représentent un réel problème pour la gestion du trafic aérien et pour la planification des vols. Il faut estimer avant le décollage la capacité à pouvoir atterrir à destination sur la base de prévisions météorologiques, plus ou moins fiables, et le cas échéant prévoir des solutions de repli.

Le problème de l'atterrissage des aéronefs par conditions de visibilité réduite a fait l'objet du développement de plusieurs techniques qui sont actuellement utilisées.

L'une de ces techniques est le système d'atterrissage aux instruments (Instrument Landing System, ILS). Le système ILS repose sur un équipement radiofréquence installé au sol, au niveau de la piste d'atterrissage, et un instrument compatible placé à bord de l'aéronef. L'utilisation d'un tel système de guidage requiert des équipements onéreux et une qualification spécifique des pilotes. Il ne peut par ailleurs pas être installé sur tous les aéroports. Ce système n'est pas généralisé et il est en phase de retrait d'exploitation.

Une autre alternative est l'aide à l'atterrissage par GPS. Bien qu'ayant une précision suffisante, la fiabilité de cette solution est trop faible puisqu'elle peut facilement - intentionnellement ou non - être sujette au brouillage. Son intégrité n'est pas garantie.

Enfin, une technique de vision augmentée est également employée (Enhanced Vision System, EVS). Le principe est d'utiliser des senseurs plus performants que l'œil du pilote par conditions météorologiques dégradées, et d'incruster les informations collectées dans le champ de vision du pilote, au moyen d'un affichage tête haute ou sur la visière d'un casque porté par le pilote. Cette technique repose essentiellement sur l'emploi de capteurs pour détecter le rayonnement des lampes disposées le long de la piste et sur la rampe d'approche. Les lampes à incandescence produisent de la lumière visible mais elles émettent aussi dans le domaine infrarouge. Des capteurs dans le domaine infrarouge permettent de détecter ces rayonnements et la portée de détection est meilleure que celle de l'être humain dans le domaine visible, lors de conditions météorologiques dégradées. Une amélioration de la visibilité permet donc dans une certaine mesure d'améliorer les phases d'approche et de limiter les approches abandonnées. Toutefois, cette technique repose sur le rayonnement infrarouge parasite des lampes présentes au voisinage de la piste. Pour des soucis de durabilité des lampes, la tendance actuelle est au remplacement des lampes à incandescence par les lampes à LED. Ces dernières ont un spectre moins étendu dans le domaine infrarouge. Un effet collatéral est donc de provoquer une obsolescence technique des systèmes EVS à base de capteurs infrarouges.

Une alternative aux senseurs infrarouges est l'obtention d'images par un senseur radar, en bande centimétrique ou millimétrique. Certaines bandes de fréquence choisies en dehors des pics d'absorption de la vapeur d'eau présentent une sensibilité très faible aux conditions météorologiques difficiles. De tels senseurs permettent donc de produire une image au travers de brouillard par exemple. Cependant, même si ces capteurs ont une résolution en distance fine, ils présentent une résolution angulaire bien plus grossière que les solutions optiques. La résolution est directement liée à la taille des antennes utilisées, et elle est souvent trop grossière pour obtenir un positionnement précis de la piste d'atterrissage à une distance suffisante pour effectuer les manœuvres de recalage.

Il existe donc un besoin de nouvelles solutions techniques permettant de guider la manœuvre d'approche en vue d'un atterrissage par conditions de visibilité réduite.

Un but de l'invention est notamment de permettre un tel guidage par conditions de visibilité réduite. A cet effet l'invention a pour objet un dispositif d'aide à l'atterrissage d'un aéronef pour rallier une piste donnée, ledit dispositif effectuant la détection et le positionnement de ladite piste par rapport audit aéronef, et comportant au moins :
- Un senseur radar ;
- Un système de collecte d'images radar, effectuant la collecte et l'étiquetage d'images radar obtenues par des senseurs radar portés par des aéronefs lors de phases d'atterrissage sur ladite piste sous condition nominale, ledit étiquetage d'une image donnant des informations de positionnement de la dite piste par rapport à l'aéronef porteur du senseur prenant ladite image ;
- Un réseau d'apprentissage entraîné à partir des images étiquetées et collectées lors d'atterrissages sur ladite piste sous condition nominale, ledit réseau estimant la position de ladite piste d'atterrissage par rapport audit aéronef grâce aux images radar obtenues par ledit senseur lors de l'atterrissage en cours ;
- Un bloc fonctionnel effectuant l'exploitation et la mise en forme des données de positionnement de ladite piste par rapport audit aéronef issues du réseau d'apprentissage permettant de formater lesdites données dans une interface adaptée.

Ladite interface permettant l'affichage de ladite piste ou des symboles la représentant, ledit dispositif comporte par exemple un système d'affichage relié audit bloc fonctionnel de mise en forme. Ce système d'affichage est par exemple un système de visualisation tête haute ou un casque.

Ladite interface fournit par exemple des commandes de vol permettant audit aéronef de rallier une trajectoire d'atterrissage nominale.

Dans un mode de réalisation particulier, pour un aéronef porteur d'un senseur radar d'acquisition d'images, l'étiquetage desdites images comporte l'une au moins des indications suivantes :
- Date d'acquisition de l'image relativement au moment du toucher dudit porteur sur les pistes ;
- Localisation dudit porteur au moment de la prise d'image :
   * Absolue : position GPS ;
   * Relative par rapport à la piste : centrale inertielle ;
- Altitude dudit porteur ;
- Attitude dudit porteur ;
- Vecteur vitesse dudit porteur (obtenu par ledit senseur radar en fonction de sa vitesse par rapport au sol) ;
- Vecteur accélération dudit porteur (obtenu par ledit senseur radar en fonction de sa vitesse par rapport au sol) ;
- Position, relativement au dit porteur, de la piste et de structures de référence obtenue par des moyens optiques à localisation précise.

Ledit système de collecte comportant une mémoire de stockage desdites images radar étiquetées, ladite mémoire est par exemple mise à jour tout au long des atterrissages nominaux effectués par un ensemble d'aéronef sur ladite piste. Ladite mémoire de stockage est par exemple partagée par plusieurs aéronefs équipés dudit dispositif pour l'apprentissage dudit réseau d'apprentissage.

Ledit réseau d'apprentissage fournit par exemple un indicateur de performance quantifiant la précision de positionnement de ladite piste par rapport audit aéronef, cet indicateur étant obtenu par corrélation entre l'image de ladite piste calculée par ledit réseau d'apprentissage et une image de référence.

L'invention concerne également un procédé d'aide à l'atterrissage d'un aéronef pour rallier une piste d'atterrissage donnée, ledit procédé effectuant la détection et le positionnement de ladite piste par rapport audit aéronef, et comportant au moins :
- Une première étape d'obtention d'une première série d'images radar par un senseur radar ;
- Une deuxième étape d'estimation de la position de ladite piste par rapport audit aéronef par un réseau d'apprentissage, l'apprentissage dudit réseau d'apprentissage étant effectuée sur un ensemble d'images radar de ladite piste collectées lors de phases d'atterrissages nominaux ou possibles d'aéronefs, lesdites images étant étiquetées avec au moins une information de position de ladite piste par rapport audit aéronef ;
   lesdites première et deuxième étapes étant répétées jusqu'au ralliement de ladite piste.

Ladite position estimée est par exemple transmise à une interface permettant l'affichage de la piste ou de symboles représentatifs par un système d'affichage.

Ladite position estimée est par exemple transmise à une interface fournissant des commandes de vol permettant audit aéronef de rallier une trajectoire d'atterrissage nominale.

Dans un mode de mise en œuvre particulier, pour un aéronef porteur d'un senseur radar d'acquisition d'images, l'étiquetage desdites images comporte l'une au moins des indications suivantes :
- Date d'acquisition de l'image relativement au moment du toucher dudit porteur sur les pistes ;
- Localisation dudit porteur au moment de la prise d'image :
   * Absolue : position GPS ;
   * Relative par rapport à la piste : centrale inertielle ;
- Altitude dudit porteur ;
- Attitude dudit porteur ;
- Vecteur vitesse dudit porteur (obtenu par ledit senseur radar en fonction de sa vitesse par rapport au sol) ;
- Vecteur accélération dudit porteur (obtenu par ledit senseur radar en fonction de sa vitesse par rapport au sol) ;
- Position, relativement audit porteur, de la piste et de structures de référence obtenue par des moyens optiques à localisation précise.

Lesdites images radar collectées et étiquetées étant stockées dans une mémoire de stockage, ladite mémoire est par exemple mise à jour tout au long des atterrissages nominaux effectués par un ensemble d'aéronef sur ladite piste. Ladite mémoire de stockage est par exemple partagée pour l'apprentissage de réseaux d'apprentissage de plusieurs aéronefs.

D'autres caractéristiques et avantages de l'invention apparaîtront à l'aide de la description qui suit, faite en regard de dessins annexés qui représentent :
[Fig.1] La figure 1, un exemple de réalisation d'un dispositif selon l'invention ;
[Fig.2] La figure 2, un exemple de mise en œuvre d'un procédé d'aide à l'atterrissage selon l'invention.

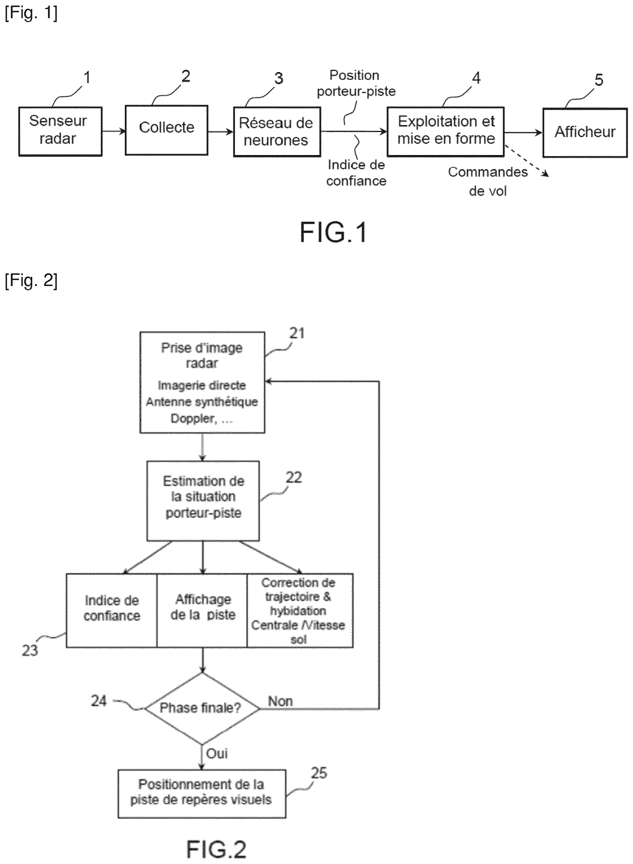

La figure 1 présente les composants d'un dispositif selon l'invention. Le dispositif aide un aéronef à l'atterrissage par détection et positionnement de la piste d'atterrissage par rapport à l'aéronef. Il comporte au moins :
- Un senseur radar 1 porté par ledit aéronef ;
- Un système 2 de collecte d'images radar, effectuant l'étiquetage et le stockage d'images radar obtenues par le senseur 1 et par des senseurs d'autres aéronef lors de phases d'atterrissage par temps clair, assurées par le pilote et/ou les instruments de navigation desdits aéronefs ;
- Un réseau d'apprentissage qui peut être par exemple un réseau de neurones 3 entraîné à partir de la collecte d'images radar, c'est-à-dire à partir des images radar obtenues lors d'atterrissages nominaux (un atterrissage nominal étant un atterrissage réussi, effectué de jour ou de nuit, par temps clair, pluie, brouillard ou neige notamment, cet atterrissage ayant été effectué avec succès, sans incidents) et dont la fonction est d'estimer la position de la piste d'atterrissage par rapport au porteur grâce aux images radar obtenues en temps réel par le senseur radar 1 (c'est-à-dire obtenues lors de l'atterrissage en cours), ces images étant stockées dans une base données associée au système 2 de collecte ;
- Un autre bloc fonctionnel 4 effectuant l'exploitation et la mise en forme des données issues du réseau de neurones permettant de formater ces données dans une interface adaptée, cette interface pouvant permettre l'affichage de la piste ou des symboles la représentant, voire de fournir des commandes de vol permettant de rallier la trajectoire d'atterrissage nominale.

Le dispositif comprend par exemple un système 5 d'affichage de la piste, de repères visuels et de données de navigations pertinents intégrées dans le champ de vision du pilote via un système de visualisation tête haute (HUD) ou un casque, tout autre système de visualisation étant possible.

Le senseur radar, porté par l'aéronef, fonctionne par exemple en bande centimétrique ou en bande millimétrique. Il permet de positionner le porteur par rapport à une piste d'atterrissage sur laquelle ce dernier souhaite atterrir, indépendamment des conditions de visibilité du pilote.

Les images radar sont fournies par le senseur à chaque phase d'atterrissage, ce qui permet d'enrichir continûment la base de données du système 2 de collecte. Comme indiqué précédemment, l'acquisition de ces données radar est effectuée lors de manœuvres d'atterrissage nominales, par temps clair, de jour ou de nuit. Cette acquisition est aussi faite dans différentes conditions possibles d'aérologie et de manœuvre (différents types de vents, différentes arrivées de travers, différentes pentes d'approches), l'information de toutes ces conditions étant contenues dans l'étiquetage des images. Une fois l'atterrissage terminé, les données radar obtenue lors de la phase d'atterrissage sont enregistrées dans la base de données et étiquetées comme faisant partie d'une manœuvre d'atterrissage nominale ou possible. L'étiquetage comporte au moins cette information d'atterrissage nominale, mais il peut avantageusement être étendu aux informations additionnelles suivantes, en fonction de la disponibilité sur le porteur :
- Date d'acquisition de l'image relativement au moment du toucher des roues du porteur sur les pistes ;
- Localisation du porteur au moment de la prise d'image :
   * Absolue : position GPS ;
   * Relative par rapport à la piste : centrale inertielle ;
- Altitude du porteur ;
- Attitude du porteur ;
- Vecteur vitesse du porteur (obtenu par le radar 1 en fonction de sa vitesse par rapport au sol) ;
- Vecteur accélération du porteur (obtenu par le radar 1 en fonction de sa vitesse par rapport au sol) ;
- Position, relativement au porteur, de la piste et de structures de référence obtenue par des moyens optiques à localisation précise.

Une fois étiquetées, ces images radar sont utilisées par le réseau de neurones 3. Elles servent à entraîner celui-ci. Plus précisément, le réseau de neurone effectue l'apprentissage de la piste d'atterrissage à partir de toutes les images stockées et étiquetées dans la base de données du système de collecte 2. Une fois entraîné, le réseau de neurones 3 est capable à partir d'une série d'images radar de positionner la piste et son environnement par rapport au porteur, plus particulièrement de positionner le point d'atterrissage. La série d'images en entrée du réseau de neurones sont les images prises par le radar 1 dans la phase d'atterrissage en cours.

Il est alors possible, pour le bloc fonctionnel 4, d'estimer et de corriger l'écart de la trajectoire correspondante (trajectoire du porteur dans l'atterrissage en cours) par rapport à une trajectoire d'atterrissage nominale ou possible. Il est aussi possible d'afficher la piste dans le champ de vision du pilote au moyen du système d'affichage 5. La précision de ce positionnement et de la correction de trajectoire sont d'autant plus précises que la base d'images d'apprentissage (stockées par le système de collecte 2) est complète.

Cette base d'images d'apprentissage peut être alimentée collectivement par tous les aéronefs qui utilisent le même système. Ainsi, l'ensemble des aéronefs qui atterrissent sur une même piste peuvent enrichir cette base par les images radar obtenues par leurs radars. Avantageusement, chaque aéronef bénéficie alors d'une base exhaustive et tenue à jour.

Etant donné que chaque base de données est mise à jour à partir de plusieurs dispositifs embarqués il faut prendre en compte les biais de chaque dispositif contribuant à une base de données. Ces biais sont liés en particulier aux dispersions technologiques sur le radar de chaque dispositif et aux disparités d'installation. Les données enregistrées (images radar) sont donc par exemple également étiquetées avec l'information du porteur de façon à pouvoir identifier et corriger les biais. La correction de ces biais est effectuée par le réseau de neurones qui exploite les images étiquetées pour positionner la piste et son environnement par rapport au porteur.

Le réseau de neurones 3 peut également fournir un indicateur de performance permettant de quantifier la précision de positionnement et de guidage du porteur en temps réel lors des phases d'atterrissage, de façon à obtenir un degré de confiance. Cet indicateur de performance est par exemple un indice de corrélation entre l'image reconstituée par le réseau de neurone, dans laquelle est positionné le porteur, et une image de référence telle qu'une image enregistrée ou un modèle numérique de terrain (MNT).

Les métriques de convergence et de performances associées à la base de données de chaque piste enregistrée peuvent être calculées. Elles permettent d'évaluer la qualité du guidage atteignable par le dispositif sur chacune des pistes.

Cette qualité dépend de la taille de la base de données mais aussi de l'environnement des pistes, de la qualité des structures remarquables qui ont un poids d'autant plus important dans l'apprentissage du réseau de neurones. Des structures remarquables comme la piste elle-même ou bien les différentes lampes d'approche se rencontrent systématiquement. D'autres éléments spécifiques à l'environnement de chaque piste ont un rôle important dans l'amélioration du positionnement, ces éléments spécifique sont par exemple les clôtures de la zone aéroportuaire, les antennes ou encore les bâtiments.

Le dispositif selon l'invention peut être pourvu d'une fonction de visualisation du réseau de neurones, pour en garantir l'observabilité. Cette fonction de visualisation permet notamment de visualiser les structures et schémas de référence fortement pondérés qui dominent la reconnaissance et le repérage.

Les images radar obtenues peuvent être des images radar directes ou des images de type SAR (« Synthetic Aperture Radar »). Ces dernières permettent d'affiner la précision angulaire tout en bénéficiant du changement d'angle de vue du déplacement du porteur.

Dans un mode de réalisation particulier d'un dispositif selon l'invention, tous ses composants (senseur radar 1, système 2 de collecte d'images radar, réseau de neurones 3, bloc 4 d'exploitation et de mise en forme des données issues du réseau de neurones, et système d'affichage 5) sont sur l'aéronef. La base de données du système de collecte est enrichie régulièrement par les images étiquetées issues des systèmes de collectes d'autres aéronefs. Le réseau de neurones entretient ou améliore son apprentissage de la piste ou des pistes au fur et à mesure de l'enrichissement de cette base de données. L'apprentissage se fait en dehors des phases d'atterrissage lorsque le réseau de neurones n'est pas sollicité pour reconstituer les paramètres de la piste d'atterrissage. L'apprentissage se fait sur les images étiquetées telles que stockées dans la base de données du dispositif.

Les mises à jour des bases de données des systèmes de collecte peuvent se faire par tous moyens de communications. Chaque mise à jour est par exemple effectuée après chaque atterrissage nominal, au moins avec les images du porteur qui vient d'atterrir. Des règles de mises à jour à partir des images des systèmes de collectes d'autres aéronefs peuvent être établies, en particulier pour définir la périodicité de ces mises à jour et les modes de mises à jour utilisés, notamment au niveau des moyens de communication.

Le système de collecte 2 et le réseau de neurones et le bloc 4 d'exploitation des données sont par exemple intégrés dans le calculateur de vol de l'aéronef.

Dans un autre mode de réalisation, le système de collecte 2 n'est pas embarqué sur le porteur, en particulier sa mémoire de stockage. La fonction d'étiquetage est par exemple réalisée en vol avec les prises d'images radar. Les images étiquetées sont envoyées, depuis chaque aéronef, à destination du système de collecte et de la mémoire de stockage par des moyens de communication appropriés, en temps réel tout au long de l'atterrissage ou de façon différée, par exemple après chaque atterrissage. Dans cet autre mode de réalisation, l'apprentissage par le réseau de neurones se fait au sol. Dans ce cas également, une même mémoire de stockage des images étiquetées peut être partagée par plusieurs aéronefs. Avantageusement, la mémoire de stockage partagée comporte ainsi un plus grand nombre de données, favorisant l'apprentissage.

Le procédé d'atterrissage selon l'invention, mis en œuvre par exemple par un dispositif du type de celui de la figure 1, comporte les étapes décrites ci-après en regard de la figure 2, pour une piste d'atterrissage donnée.

Deux étapes préliminaires non représentées concernent la collecte des images et l'apprentissage de la piste à partir des images collectées comme décrit précédemment.

Une première étape 21 réalise la prise d'une première série d'images radar, ces images étant des images radar ou des images SAR obtenues par le senseur radar 1 embarqué sur l'aéronef. Chaque image radar est étiquetée conformément aux images déjà enregistrées dans le système de collecte 2.

Dans la deuxième étape 22, la situation du porteur par rapport à la piste et à son environnement est estimée au moyen du réseau de neurones, à partir de la série d'images radar obtenues. Il est possible de prévoir une série constituée d'une seule image radar, l'estimation pouvant être réalisée à partir d'une seule image.

Dans une troisième étape 23, on exploite l'estimation fournie par le réseau de neurones 3, cette exploitation étant réalisée à l'aide bloc fonctionnel 4 par exemple. Ce dernier fournit les données mises en forme pour l'affichage (effectué par le système d'affichage 5) et pour fournir les commandes de vol permettant de corriger la trajectoire. Il permet également de présenter sous une forme exploitable l'indicateur de confiance calculé par le réseau de neurones.

A la fin de cette troisième étape 24, si l'avion n'est pas en phase finale d'atterrissage (c'est-à-dire au point de rallier la piste d'atterrissage), le procédé reboucle sur la première étape 21 où l'on obtient une nouvelle série d'images radar. Dans le cas contraire, si l'avion est en phase finale d'atterrissage on parvient 25 au positionnement final de l'aéronef par rapport à la piste avec la trajectoire d'atterrissage définitive.

Avantageusement, l'atterrissage au moyen d'un dispositif selon l'invention est particulièrement robuste aux variations ponctuelles de l'environnement, par exemple la présence de véhicules ou de végétation saisonnière, qui posent des problèmes à des algorithmes figés. En outre l'invention s'adapte aux variations pérennes de l'environnement, telles que des nouvelles constructions ou infrastructures par exemple, en intégrant ces éléments dans la base d'apprentissage.

## Revendications

1. Dispositif d'aide à l'atterrissage d'un aéronef pour rallier une piste donnée, **caractérisé en ce qu'**effectuant la détection et le positionnement de ladite piste par rapport audit aéronef, il comporte au moins :
- Un senseur radar (1) ;
- Un système (2) de collecte d'images radar, effectuant la collecte et l'étiquetage d'images radar obtenues par des senseurs radar portés par des aéronefs lors de phases d'atterrissage sur ladite piste sous condition nominale, ledit étiquetage d'une image donnant des informations de positionnement de la dite piste par rapport à l'aéronef porteur du senseur radar prenant ladite image ;
- Un réseau d'apprentissage (3) entraîné à partir des images étiquetées et collectées lors d'atterrissages sur ladite piste sous condition nominale, ledit réseau estimant la position de ladite piste d'atterrissage par rapport audit aéronef grâce aux images radar obtenues par ledit senseur radar (1) lors de l'atterrissage en cours ;
- Un bloc fonctionnel (4) effectuant l'exploitation et la mise en forme des données de positionnement de ladite piste par rapport audit aéronef issues du réseau d'apprentissage permettant de formater lesdites données dans une interface adaptée.

2. Dispositif selon la revendication 1, **caractérisé en ce que** ladite interface permettant l'affichage de ladite piste ou des symboles la représentant, ledit dispositif comporte un système d'affichage (5) relié audit bloc fonctionnel (4) de mise en forme.

3. Dispositif selon la revendication 2, **caractérisé en ce que** le système d'affichage est un système de visualisation tête haute ou un casque.

4. Dispositif selon l'une des revendications précédentes, **caractérisé en ce que** ladite interface fournit des commandes de vol permettant audit aéronef de rallier une trajectoire d'atterrissage nominale.

5. Dispositif selon l'une quelconque des revendications précédentes, **caractérisé en ce que**, pour un aéronef porteur d'un senseur radar d'acquisition d'images, l'étiquetage desdites images comporte l'une au moins des indications suivantes :
- Date d'acquisition de l'image relativement au moment du toucher dudit porteur sur les pistes ;
- Localisation dudit porteur au moment de la prise d'image :
* Absolue : position GPS ;
* Relative par rapport à la piste : centrale inertielle ;
- Altitude dudit porteur ;
- Attitude dudit porteur ;
- Vecteur vitesse dudit porteur (obtenu par ledit senseur radar en fonction de sa vitesse par rapport au sol) ;
- Vecteur accélération dudit porteur (obtenu par ledit senseur radar en fonction de sa vitesse par rapport au sol) ;
- Position, relativement au dit porteur, de la piste et de structures de référence obtenue par des moyens optiques à localisation précise.

6. Dispositif selon l'une quelconque des revendications précédentes, **caractérisé en ce que** ledit système de collecte (2) comportant une mémoire de stockage desdites images radar étiquetées, ladite mémoire est mise à jour tout au long des atterrissages nominaux effectués par un ensemble d'aéronef sur ladite piste.

7. Dispositif selon la revendication 6, **caractérisé en ce que** ladite mémoire de stockage est partagée par plusieurs aéronefs équipés dudit dispositif pour l'apprentissage dudit réseau d'apprentissage.

8. Dispositif selon l'une quelconque des revendications précédentes, **caractérisé en ce que** ledit réseau d'apprentissage (3) fournit un indicateur de performance quantifiant la précision de positionnement de ladite piste par rapport audit aéronef, cet indicateur étant obtenu par corrélation entre l'image de ladite piste calculées par ledit réseau d'apprentissage et une image de référence.

9. Dispositif selon l'une quelconque des revendications précédentes, **caractérisé en ce que** ledit réseau d'apprentissage (3) est un réseau de neurones.

10. Procédé d'aide à l'atterrissage d'un aéronef pour rallier une piste d'atterrissage donnée, **caractérisé en ce qu'**effectuant la détection et le positionnement de ladite piste par rapport audit aéronef, il comporte au moins :
- Une première étape (21) d'obtention d'une première série d'images radar par un senseur radar (1) ;
- Une deuxième étape (22) d'estimation de la position de ladite piste par rapport audit aéronef par un réseau d'apprentissage (3), l'apprentissage dudit réseau d'apprentissage étant effectué sur un ensemble d'images radar de ladite piste collectées lors de phases d'atterrissages nominaux ou possibles d'aéronefs, lesdites images étant étiquetées avec au moins une information de position de ladite piste par rapport audit aéronef ;
lesdites première et deuxième étapes étant répétées jusqu'au ralliement de ladite piste.

11. Procédé selon la revendication 10, **caractérisé en ce que** ladite position estimée est transmise à une interface permettant l'affichage de la piste ou de symboles représentatifs par un système d'affichage (5).

12. Procédé selon la revendication 11, **caractérisé en ce que** le système d'affichage est un système de visualisation tête haute ou un casque.

13. Procédé selon l'une des revendications 10 à 12, **caractérisé en ce que** ladite position estimée est transmise à une interface fournissant des commandes de vol permettant audit aéronef de rallier une trajectoire d'atterrissage nominale.

14. Procédé selon l'une quelconque des revendications 10 à 13, **caractérisé en ce que**, pour un aéronef porteur d'un senseur radar d'acquisition d'images, l'étiquetage desdites images comporte l'une au moins des indications suivantes :
- Date d'acquisition de l'image relativement au moment du toucher dudit porteur sur les pistes ;
- Localisation dudit porteur au moment de la prise d'image :
* Absolue : position GPS ;
* Relative par rapport à la piste : centrale inertielle ;
- Altitude dudit porteur ;
- Attitude dudit porteur ;
- Vecteur vitesse dudit porteur (obtenu par ledit senseur radar en fonction de sa vitesse par rapport au sol) ;
- Vecteur accélération dudit porteur (obtenu par ledit senseur radar en fonction de sa vitesse par rapport au sol) ;
- Position, relativement audit porteur, de la piste et de structures de référence obtenue par des moyens optiques à localisation précise.

15. Procédé selon l'une quelconque des revendications 10 à 14, **caractérisé en ce que** lesdites images radar collectées et étiquetées étant stockées dans une mémoire de stockage, ladite mémoire est mise à jour tout au long des atterrissages nominaux effectués par un ensemble d'aéronef sur ladite piste.

16. Procédé selon la revendication 15, **caractérisé en ce que** ladite mémoire de stockage est partagée pour l'apprentissage de réseaux d'apprentissage (3) de plusieurs aéronefs.
